Europäisches Patentamt

European Patent Office

Office européen des brevets

(11) Veröffentlichungsnummer: **0 116 296**
**B1**

(12) **EUROPÄISCHE PATENTSCHRIFT**

(45) Veröffentlichungstag der Patentschrift:
20.04.88

(21) Anmeldenummer: **84100284.3**

(22) Anmeldetag: **12.01.84**

(51) Int. Cl.⁴: **H 04 Q 3/00,** H 04 M 1/00,
H 04 N 7/14

(54) **Verfahren und Vorrichtung zur Signalisierung zwischen Bildfernsprechapparaten bei einer bestehenden Fernsprechverbindung.**

(30) Priorität: **10.02.83 DE 3304509**

(43) Veröffentlichungstag der Anmeldung:
**22.08.84 Patentblatt 84/34**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**DE - A - 2 009 075**
**US - A - 3 573 377**
**US - A - 3 922 491**

**FUJITSU SCIENTIFIC AND TECHNICAL JOURNAL, Band 9, Nr. 3, September 1973, Seiten 1-40, Kawasaki, JP, HIROBUMI ARAKAWA u.a.: "Video switching system"**

(73) Patentinhaber: **KRONE Aktiengesellschaft,**
**Beeskowdamm 3-11, D-1000 Berlin 37 (DE)**

(72) Erfinder: **Weber, Jens, Dr., Im Dol 33,**
**D-1000 Berlin 33 (DE)**
Erfinder: **Czempiel, Ernst-Michael, Spandauer Damm 86,**
**D-1000 Berlin 19 (DE)**

(74) Vertreter: **Patentanwälte Beetz sen. - Beetz jun. Timpe -**
**Siegfried - Schmitt-Fumian, Steinsdorfstrasse 10,**
**D-8000 München 22 (DE)**

**Beschreibung**

Die Erfindung betrifft ein Verfahren und eine Vorrichtung zur Signalisierung des Zustandekommens einer Bildfernsprechverbindung mit Bildfernsprechapparaten über eine bestehende Fernsprechverbindung.

Innerhalb der neu entwickelten breitbandigen Glasfasernetze sind Bildfernsprechverbindungen vorgesehen.

Ein Fernsprechapparat wird – zusammen mit einer Bildschirmanzeigevorrichtung, z.B. einem Fernsehgerät – mit einem Anschlussgerät verbunden, in dem die optische Teilnehmeranschlussleitung endet.

Die optische Faser wird für den vorgesehenen Bildfernsprechdienst bidirektional mit Bild- und Fernsprechsignalen belegt. Zur Übertragung der Bildsignale ist aber eine vorher bestehende Bildfernsprechverbindung nötig.

Zum bekannten Stand der Technik gehört eine Schaltungsanordnung zum Übertragen besonderer Nachrichten, beispielsweise Fernsehzeichen, über Verbindungswege, die parallel zu den normalen Nachrichten-Verbindungswegen aufgebaut werden, in Fernsprechanlagen, in denen die Möglichkeit zur Identifizierung der rufenden und gerufenen Teilnehmer vorhanden ist (DE-A-2 009 075). Bei dieser bekannten Schaltungsanordnung sind die Teilnehmer-Anschlussschaltungen mit einem Teilnehmer-Zusatz ergänzt, wenn die betreffenden Teilnehmer Einrichtungen zum Senden und/oder Empfangen der besonderen Nachrichten besitzen. Zur Feststellung eines rufenden Teilnehmers wird ein Identifizierungston über die Teilnehmer-Anschlussschaltung des gerufenen Teilnehmers angelegt. Im Gegensatz zur vorliegenden Erfindung wird jedoch das Zustandekommen einer Bildfernsprechverbindung nicht angezeigt.

Das Zustandekommen einer Fernsprechverbindung ist in heutigen Fernsprechnetzen bekannterweise aus den Hörtönen nur sehr unsicher erfassbar und daher z.B. den Hörgeschädigten unzugänglich.

Über das Bildfernsprechgerät ist auch Taubstummen die Möglichkeit gegeben, sich mit anderen Bildfernsprechteilnehmern visuell zu verständigen.

Die Aufgabe der Erfindung ist es, ein Verfahren und eine Vorrichtung zu schaffen, mit denen das Zustandekommen einer Bildfernsprechverbindung eindeutig signalisiert werden kann.

Zur Lösung der obigen Aufgabe ist das erfindungsgemässe Verfahren zur Signalisierung des Zustandekommens einer Bildfernsprechverbindung mit Bildfernsprechapparaten über eine bestehende Fernsprechverbindung gekennzeichnet durch folgende Schritte:

A) Erzeugung 2 eines Bildfernsprecherkennungssignals 2a im Bildfernsprechapparat 1 des gerufenen Teilnehmers B bei Abheben des Handapparats 1a durch den gerufenen Teilnehmer B nach Eintreffen eines Rufes 1, 2;

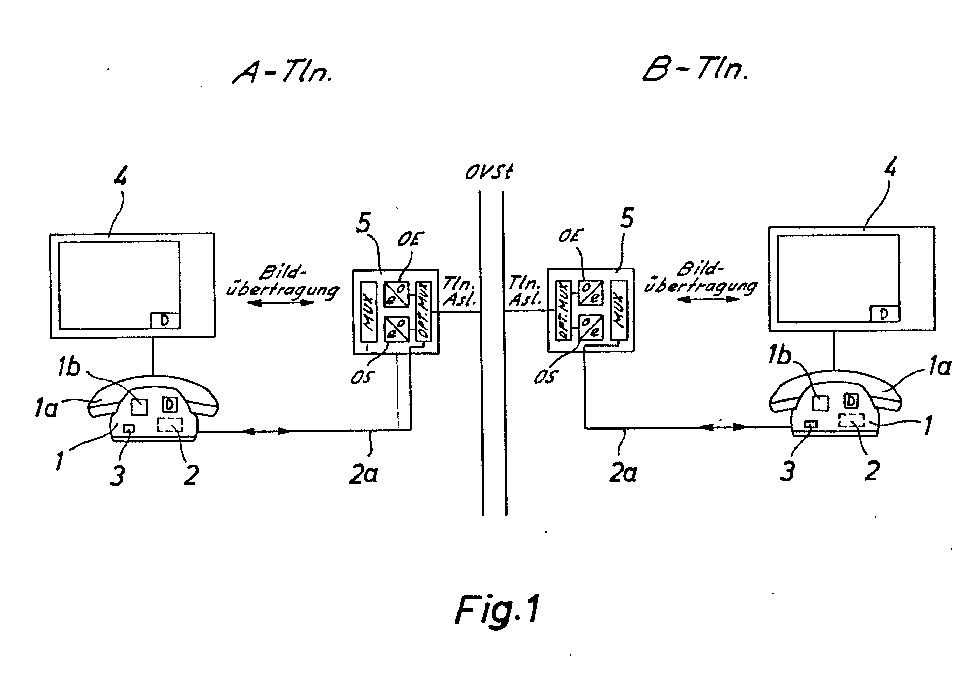

B) Übertragen des Bildfernsprecherkennungssignals 2a im Tonkanal (über MUX 5, Figur 1) zum Bildfernsprechapparat 1 eines anrufenden Teilnehmers (A-Teilnehmers);

C) Empfangen des Bildfernsprecherkennungssignals 2a im Bildfernsprechapparat 1 des anrufenden Teilnehmers (A-Teilnehmers) nach Zustandekommen einer Fernsprechverbindung;

D) Erfassen (Auswertung 3) des Bildfernsprecherkennungssignals 2a im Bildfernsprechapparat 1 des anrufenden Teilnehmers (A-Teilnehmers) und

E) Erzeugen einer akustischen und/oder optischen Anzeige D, zur Information, dass der gerufene Teilnehmer (B-Teilnehmer) eine Bildfernsprecheinrichtung besitzt nach Erfassung (Auswertung 3) des Bildfernsprecherkennungssignals 2a im Bildfernsprechapparat 1 des rufenden Teilnehmers (A-Teilnehmers).

Vorteilhafterweise wird das Erkennungssignal unmittelbar nach Betätigung des Gabelumschalters des Bildfernsprechapparates des gerufenen Teilnehmers (B-Teilnehmer) erzeugt und übertragen. Es ist weiterhin vorteilhaft, wenn das Erkennungssignal nur während einer kurzen Zeitdauer erzeugt wird, so dass es bereits beendet ist, wenn der Handapparat in Sprechposition ist.

Die Anzeige kann automatisch nach Ablauf einer zu ihrer Erkennung genügend grossen Zeit oder durch manuelles Rücksetzen des anrufenden Teilnehmers beendet werden.

Gemäss einer vorteilhaften Ausführungsform kann nach Erfassen des Erkennungssignals eine Bildschirmanzeigevorrichtung, z.B. ein Fernsehapparat, automatisch in Betrieb gesetzt werden.

Die erfindungsgemässe Vorrichtung zur Lösung der obigen Aufgabe, bei der jeder Teilnehmer-Anschluss ausgestattet ist mit einem Bildfernsprechapparat 1, mit einem Bildfernsprechanschlussgerät 5 und mit einer Bildschirmanzeigevorrichtung 4 ist dadurch gekennzeichnet, dass jeder Bildfernsprechapparat aufweist:

– eine Erkennungsschaltung zum Erkennen eines vom Bildfernsprechapparat abgehenden Rufes,

– eine Erkennungsschaltung zum Erkennen eines von einer Ortsvermittlungsstelle ankommenden Rufes,

– einen Gabelumschalter,

– eine von den Erkennungsschaltungen und dem Gabelumschalter gesteuerte Torschaltung,

– einen Zeitschaltkreis,

– eine von der Torschaltung gesteuerte Sendeeinrichtung zur Aussendung eines Bildfernsprecherkennungssignals und

– eine von der Torschaltung gesteuerte Erkennungsschaltung zur Erkennung eines ankommenden Bildfernsprecherkennungssignals;

dass jedes Bildfernsprechanschlussgerät aufweist:

– einen Anschluss an das Glasfasernetz über die Teilnehmer-Anschlussleitung,

– einen optisch/elektrischen Wandler als Empfänger,

– einen optisch/elektrischen Wandler als Sender, und

– einen Multiplexer für Breitband- und Schmalbanddienste; und dass eine Anzeigevorrichtung bei Empfang eines Signals durch die Erkennungsschaltung zur Erkennung des Bildfernsprecherkennungssignals eine Anzeige erzeugt.

Gemäss einem ersten Ausführungsbeispiel ist die Anzeigevorrichtung im Bildfernsprechapparat enthalten.

Vorteilhafterweise kann die Anzeigevorrichtung auch ein Teil der Bildschirmanzeigevorrichtung sein.

Die Anzeigevorrichtung kann eine optische Anzeigevorrichtung (Display) oder eine akustische Anzeigevorrichtung oder beides sein.

Die Sendeeinrichtung wird vorteilhafterweise von einem Ausgangssignal der Torschaltung in Betrieb gesetzt und von einem Ausgangssignal des Zeitschaltkreises, das beispielsweise etwa 1 Sekunde nach Inbetriebnahme der Sendeeinrichtung erzeugt werden kann, ausser Betrieb gesetzt.

Vorteilhafterweise kann die erfindungsgemässe Vorrichtung Mittel zur automatischen Inbetriebnahme der Bildschirmanzeigevorrichtung aufweisen.

Die vorteilhafte Wirkung des erfindungsgemässen Verfahrens und der erfindungsgemässen Vorrichtung besteht darin, dass in einem landesweiten Fernsprechnetz auf einfachste Weise Teilnehmer mit Bildfernsprecheinrichtung von anderen selektiert werden können. Ferner kann dadurch ein Hörgeschädigter an der Sichtanzeige erkennen, dass er eine Verbindung zu einem Bildfernsprechteilnehmer hat.

Die Erfindung wird im folgenden anhand der Zeichnung näher beschrieben. Es zeigen:

Fig. 1 ein Ausführungsbeispiel der erfindungsgemässen Vorrichtung jeweils am Ort des A-Teilnehmers und am Ort des B-Teilnehmers;

Fig. 2 ein Blockschaltbild eines Ausführungsbeispiels des in Fig. 1 dargestellten Bildfernsprechapparats.

Das in Fig. 1 dargestellte Ausführungsbeispiel zeigt in schematischer Darstellung jeweils am Ort des A-Teilnehmers und des B-Teilnehmers ein Ausführungsbeispiel der erfindungsgemässen Vorrichtung. Dabei ist die Vorrichtung des A-Teilnehmers mit der des B-Teilnehmers identisch, so dass diese sich nur durch ihre funktionellen Unterschiede beim Aufbau, Abbau und beim Bestehen der Bildfernsprechverbindung unterscheiden.

Das in Fig. 1 dargestellte Ausführungsbeispiel enthält im einzelnen:

Einen Bildfernsprechapparat 1 mit Handapparat 1a, Fernsprecheinheit 1b mit elektronischen Einrichtungen, einer Sendeeinrichtung 2 für ein Bildfernsprecherkennungssignal im Mehrtonverfahren, einer Erkennungsschaltung 3 zur Erkennung eines Bildfernsprecherkennungssignals im Mehrtonverfahren sowie mit einer Anzeigevorrichtung D,

eine Bildschirmanzeigevorrichtung 4, die ein Fernsehapparat sein kann und eine Anzeigevorrichtung D aufweist; und

ein Bildfernsprechanschlussgerät 5, das folgende Funktionsgruppen aufweist: einen Anschluss an das Glasfasernetz OPT.MUX über die Glasfaser-Teilnehmeranschlussleitung Tln.Asl., einen optisch/elektrischen Wandler o/e als Empfänger OE, einen optisch/elektrischen Wandler o/e als Sender OS und einen Multiplexer MUX für Breitband- und Schmalbanddienste.

Bei bestehender Bildfernsprechverbindung wird zwischen dem Bildfernsprechanschlussgerät 5 und der Bildschirmanzeigevorrichtung 4 über einen Bildübertragungskanal das empfangene und zu sendende Bild übertragen.

Das Bildfernsprecherkennungssignal 2a wird über einen gesonderten Kanal vom Bildfernsprechapparat 1 zum Bildfernsprechanschlussgerät 5 und umgekehrt übertragen.

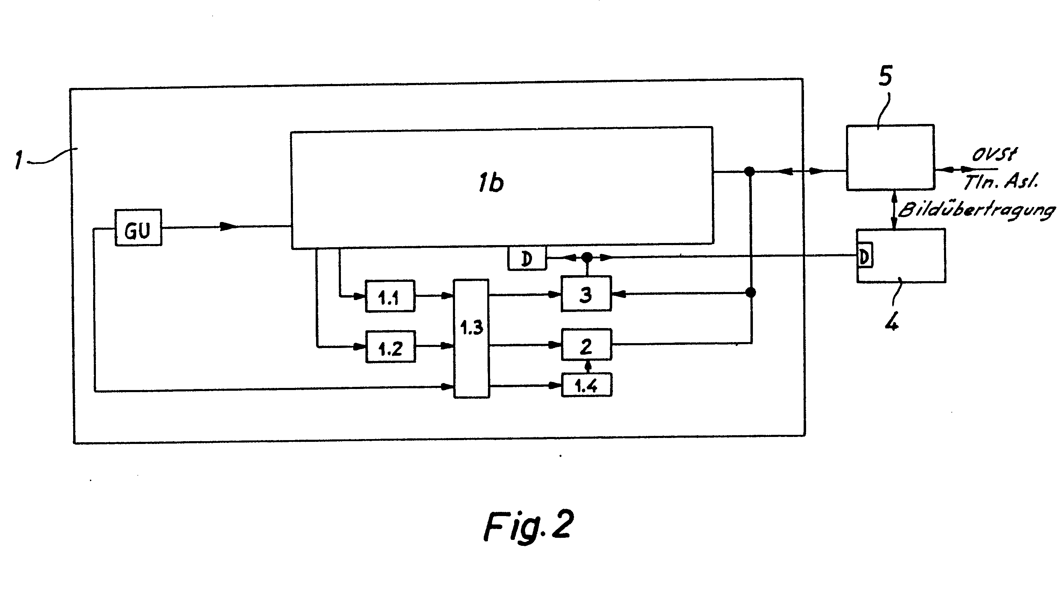

Fig. 2 zeigt ein Blockschaltbild eines erfindungsgemässen Ausführungsbeispiels des in Fig. 1 dargestellten Bildfernsprechapparats 1.

Der Bildfernsprechapparat 1 enthält folgende Funktionsgruppen: Eine Erkennungsschaltung 1.1, die einen vom Fernsprechapparat 1 abgehenden Ruf (Ziffernwahl) erkennt, eine Erkennungsschaltung 1.2, die einen von der Ortsvermittlungsstelle OVSt ankommenden Ruf erkennt, einen bekannten Gabelumschalter GU, eine Torschaltung 1.3, die vom Gabelumschalter GU und von den Erkennungsschaltungen 1.1 und 1.2 angesteuert wird und ihrerseits einen Zeitschaltkreis 1.4, die Sendeeinrichtung 2 und die Erkennungsschaltung 3 ansteuert.

Fig. 2 zeigt ferner im Bildfernsprechapparat 1 die Fernsprecheinheit 1b mit elektronischen Einrichtungen und eine Anzeigevorrichtung D, die von der Erkennungsschaltung 3 angesteuert ist.

Der Fernsprechapparat ist mit der Bildschirmanzeigevorrichtung 4 und mit dem Bildfernsprechanschlussgerät 5 verbunden.

Im folgenden wird zunächst der Betrieb des in Fig. 2 dargestellten Ausführungsbeispiels für die A-Teilnehmerseite beschrieben.

Wird am Fernsprechapparat 1 durch Abheben des Handapparates 1a der Gabelumschalter GU betätigt und durch Tastwahl ein Ruf in Richtung Ortsvermittlungsstelle OVSt abgesendet, so erkennt dies die Erkennungsschaltung 1.1 und aktiviert über die Torschaltung 1.3 die Erkennungsschaltung 3.

Wird während der Dauer eines Gesprächs von der Erkennungsschaltung 3 ein Signal empfangen und als Bildfernsprecherkennungssignal erkannt, so wird dies an der Anzeigevorrichtung D am Bildfernsprechapparat 1 und/oder am Fernsehapparat 4 angezeigt.

Anschliessend wird der Betrieb des in Fig. 2 dargestellten Ausführungsbeispiels auf der B-Teilnehmerseite beschrieben.

Die Erkennungsschaltung 1.2 erkennt einen von der Ortsvermittlungsstelle über das Bildfernsprechanschlussgerät 5 ankommenden Ruf. Durch das Abheben des Handapparates 1a steuert das Ausgangssignal des Gabelumschalters GU und das Ausgangssignal der Erkennungsschaltung 1.2 gleichzeitig die Torschaltung 1.3 an und diese startet die Erzeugung des Bildfernsprecherkennungssignals durch die Sendeeinrichtung 2 und startet gleichzeitig den Zeitschaltkreis 1.4.

Nach Ablauf der im Zeitschaltkreis 1.4 abgemessenen Zeitdauer schaltet der Zeitschaltkreis 1.4 die Sendeeinrichtung 2 ab. Dies geschieht beispielsweise eine Sekunde nach Beginn des Aussendens des Bildfernsprecherkennungssignals. Damit ist das Bildfernsprecherkennungssignal bereits beendet, wenn der Handapparat in Sprechposition ist bzw. wenn das Gespräch beginnt.

Die Bildschirmanzeigevorrichtung 4 kann gemäss einer vorteilhaften Weiterbildung der Erfindung Mittel aufweisen, die ein automatisches Einschalten der Bildschirmanzeigevorrichtung 4 durch das Ausgangsignal der Erkennungsschaltung 3 ermöglichen.

Gemäss einer weiteren vorteilhaften Ausbildung kann die Bildschirmanzeigevorrichtung 4 manuell vom rufenden Teilnehmer zurückgesetzt werden.

**Patentansprüche**

1. Verfahren zur Signalisierung des Zustandekommens einer Bildfernsprechverbindung mit Bildfernsprechapparaten (1) über eine bestehende Fernsprechverbindung, gekennzeichnet durch folgende Schritte:

A) Erzeugung (2) eines Bildfernsprecherkennungssignals (2a) im Bildfernsprechapparat (1) des gerufenen Teilnehmers (B) bei Abheben des Handapparates (1a) durch den gerufenen Teilnehmer (B) nach Eintreffen eines Rufes (1.2);

B) Übertragen des Bildfernsprecherkennungssignals (2a) im Tonkanal (über MUX 5, Figur 1) zum Bildfernsprechapparat (1) eines anrufenden Teilnehmers (A-Teilnehmer);

C) Empfangen des Bildfernsprecherkennungssignals (2a) im Bildfernsprechapparat (1) des anrufenden Teilnehmers (A-Teilnehmers) nach Zustandekommen einer Fernsprechverbindung;

D) Erfassen (Auswertung 3) des Bildfernsprecherkennungssignals (2a) im Bildfernsprechapparat (1) des anrufenden Teilnehmers (A-Teilnehmers) und

E) Erzeugung einer akustischen und/oder optischen Anzeige (D), zur Information, dass der gerufene Teilnehmer (B-Teilnehmer) eine Bildfernsprecheinrichtung besitzt nach Erfassung (Auswertung 3) des Bildfernsprecherkennungssignals (2a) im Bildfernsprechapparat (1) des rufenden Teilnehmers (A-Teilnehmers).

2. Verfahren nach Anspruch 1, dadurch gekennzeichnet, dass das Bildfernsprecherkennungssignal (2a) unmittelbar nach Betätigung des Gabelumschalters (GU) des Bildfernsprechapparates (1) des gerufenen Teilnehmers (B-Teilnehmer) erzeugt und übertragen wird.

3. Verfahren nach Anspruch 1 oder 2, dadurch gekennzeichnet, dass das Bildfernsprecherkennungssignal (2a) nur während einer kurzen Zeitdauer erzeugt wird, so dass es bereits beendet ist, wenn der Handapparat (1a) in Sprechposition ist.

4. Verfahren nach Anspruch 1, dadurch gekennzeichnet, dass die Anzeige (D) manuell durch den rufenden Teilnehmer (A-Teilnehmer) zurückgesetzt wird.

5. Verfahren nach Anspruch 1, dadurch gekennzeichnet, dass die Anzeige (D) automatisch nach Ablauf einer vorbestimmten Zeit (1.4) zurückgesetzt wird.

6. Verfahren nach Anspruch 1, dadurch gekennzeichnet, dass durch die Auswertung (3) des Bildfernsprecherkennungssignals (2a) eine Bildschirmanzeigevorrichtung (4) automatisch eingeschaltet wird.

7. Vorrichtung zur Durchführung des Verfahrens nach Anspruch 1, bei der jeder Teilnehmer-Anschluss ausgestattet ist
– mit einem Bildfernsprechapparat (1),
– mit einem Bildfernsprechanschlussgerät (5) und
– mit einer Bildschirmanzeigevorrichtung (4), dadurch gekennzeichnet, dass jeder Bildfernsprechapparat (1) aufweist:
– eine Erkennungsschaltung (1.1) zum Erkennen eines vom Bildfernsprechapparat (1) abgehenden Rufes,
– eine Erkennungsschaltung (1.2) zum Erkennen eines von einer Ortsvermittlungsstelle (OVSt) ankommenden Rufes,
– einen Gabelumschalter (GU),
– eine von den Erkennungsschaltungen (1.1 und 1.2) und dem Gabelumschalter (GU) gesteuerte Torschaltung (1.3),
– einen Zeitschaltkreis (1.4),
– eine von der Torschaltung (1.3) gesteuerte Sendeeinrichtung (2) zur Aussendung eines Bildfernsprecherkennungssignals (2a), und
– eine von der Torschaltung (1.3) gesteuerte Erkennungsschaltung (3) zur Erkennung eines ankommenden Bildfernsprecherkennungssignals;
dass jedes Bildfernsprechanschlussgerät (5) aufweist:
– einen Anschluss (OPT-MUX) an ein Bildfernsprechnetz über eine Teilnehmer-Anschlussleitung (Tln.Asl.),
– einen optisch/elektrischen Wandler (o/e) als Empfänger (OE),
– einen optisch/elektrischen Wandler (o/e) als Sender (OS) und
– einen Multiplexer (MUX) für Breitband- und Schmalbanddienste; und
dass eine Anzeigevorrichtung (D) bei Empfang eines Signals durch die Erkennungsschaltung (3) zur Erkennung des Bildfernsprecherkennungssignals (2a) eine Anzeige erzeugt.

8. Vorrichtung nach Anspruch 7, dadurch gekennzeichnet, dass die Anzeigevorrichtung (D) im Bildfernsprechapparat (1) enthalten ist.

9. Vorrichtung nach Anspruch 7, dadurch gekennzeichnet, dass die Anzeigevorrichtung (D) ein Teil der Bildschirmanzeigevorrichtung (4) ist.

10. Vorrichtung nach einem der Ansprüche 7 bis 9, gekennzeichnet durch eine optische Anzeigevorrichtung (D).

11. Vorrichtung nach einem der Ansprüche 7 bis 9, gekennzeichnet durch eine akustische Anzeigevorrichtung (D).

12. Vorrichtung nach Anspruch 7, dadurch gekennzeichnet, dass die Sendeeinrichtung (2) von einem Ausgangssignal der Torschaltung (1.3) in Betrieb gesetzt und von einem Ausgangssignal des Zeitschaltkreises (1.4) ausser Betrieb gesetzt wird.

13. Vorrichtung nach Anspruch 12, dadurch gekennzeichnet, dass das Ausgangssignal des Zeitschaltkreises (1.4) etwa 1 Sekunde nach Inbetriebnahme der Sendeeinrichtung (2) erzeugt wird.

14. Vorrichtung nach Anspruch 7, gekennzeichnet durch Mittel zur automatischen Inbetriebnahme der Bildschirmanzeigevorrichtung (4).

**Claims**

1. Method for signalling the realization of a picture telephone link with picture phone sets (1) via an existing telephone link, characterized by the following steps:

A) Generating (2) a picture phone recognition signal (2a) in the picture phone set (1) of the called user (B) as the receiver of the hand set (1a) is removed by the called user (B) upon arrival of a call (1.2);

B) transmitting said picture phone recognition signal (2a) in the sound channel (via MUX 5, Fig. 1) to said picture phone set (1) of a calling user (A-user);

C) receiving said picture phone recognition signal (2a) in said picture phone set (1) of the calling user (A-user) after realization of a telephone link;

D) detecting (evaluation 3) said picture phone recognition signal (2a) in said picture phone set (1) of said calling user (A-user), and

E) generating and acoustic and/or optical display (D) to indicate that the user called (B-user) is in the possession of a picture phone means, following detection (evaluation 3) of the picture phone recognition signal (2a) in said picture phone set (1) of the calling user (A-user).

2. Method according to claim 1, characterized in that said picture phone recognition signal (2a) is generated and transmitted immediately after actuation of the hook switch (GU) of said picture phone set (1) of the user called (B-user).

3. Method according to claim 1 or claim 2, characterized in that said picture phone recognition signal (2a) is generated only for a short time so that it is already terminated when said hand set (1a) is in the speaking position.

4. Method according to claim 1, characterized in that said display (D) is set back manually by the calling user (A-user).

5. Method according to claim 1, characterized in that said display (D) is set back automatically after lapse of a predetermined time (1.4).

6. Method according to claim 1, characterized in that by evaluation (3) of said picture phone recognition signal (2a) a picture screen display means (4) is switched on automatically.

7. Device for carrying out the method according to claim 1, wherein every user connection is equipped with
   – a picture phone set (1),
   – a picture phone connector unit (5), and with
   – a picture screen display means (4),
characterized in that every picture phone set (1) comprises:

– a recognition circuit (1.1) for recognizing a call outgoing from said picture phone set (1),
– a recognition circuit (1.2) for recognizing a call arriving from a local exchange (OVSt),
– a hook switch (GU),
– a gate circuit (1.3) controlled by said recognition circuits (1.1 and 1.2) and said hook switch (GU),
– a time switching circuit (1.4),
– a transmitting means (2) controlled by the gate circuit (1.3) for emitting a picture phone recognition signal (2a), and
– a recognition circuit (3) controlled by said gate circuit (1.3) for recognizing an incoming picture phone recognition signal;
in that every picture phone connector unit (5) comprises:
– a connection (OPT-MUX) to a picture phone network via a user connection line (Tln.Asl.),
– an optical/electrical transducer (o/e) as receiving means (OE),
– an optical/electrical transducer (o/e) as transmitting means (OS), and
– a multiplexer (MUX) for wide-band and narrow-band operation; and in that
on receiving a signal through said recognition circuit (3) a display means (D) ensures display to facilitate recognition of said picture phone recognition signal (2a).

8. Device according to claim 7, characterized in that said display means (D) is contained in said picture phone set (1).

9. Device according to claim 7, characterized in that said display means (D) forms part of said picture screen display means (4).

10. Device according to one of claims 7 through 9, characterized by an optical display means (D).

11. Device according to one of claims 7 through 9, characterized by an acoustic display means (D).

12. Device according to claim 7, characterized in that said transmitting means (2) is put into operation by an output signal of said gate circuit (1.3) and is put out of operation by an output signal of said time switching circuit (1.4).

13. Device according to claim 12, characterized in that said output signal of said time switching circuit (1.4) is generated for about 1 second after said transmitting means (2) has been put into operation.

14. Device according to claim 7, characterized by means for putting said picture screen display means (4) into operation automatically.

**Revendications**

1. Procédé de signalisation de la réalisation d'une communication entre des appareils visiophoniques (1) pendant une communication téléphonique existante, caractérisé par les sections de procédé suivantes:

A) Génération (2) d'un signal de la reconnaissance d'un appareil visiophonique (2a) dans cet appareil (1) de l'abonné appelé (B) au moment du lèvement du combiné (1a) par l'abonné B après l'arrivée d'un appel (1.2);

B) Transmission du signal (2a) de la reconnaissance d'un appareil visiophonique en canal audio (par MUX 5, Fig. 1) à l'appareil visiophonique d'un abonné appelant (abonné A);

C) Réception du signal (2a) de la reconnaissance d'un appareil visiophonique dans cet appareil (1) de l'abonné appelant (abonné A) après la réalisation d'une communication;

D) Détection (Evaluation 3) du signal (2a) de la reconnaissance d'un appareil visiophonique dans l'appareil visiophonique (1) de l'abonné appelant (abonné A) et

E) Génération d'une signalisation (D) sonore et/ou visuelle indiquant que l'abonné appelé (abonné B) possède un appareil visiophonique après la détection (évaluation 3) du signal de la reconnaissance d'un appareil visiophonique (1) dans cet appareil de l'abonné appelant (abonné A).

2. Procédé selon la revendication 1, caractérisé en ce que le signal (2a) de la reconnaissance d'un appareil visiophonique est généré et transmis aussitôt après l'actionnement du remineur (GU) de l'appareil visiophonique (1) de l'abonné appelé (abonné B).

3. Procédé selon la revendication 1 ou 2, caractérisé en ce que le signal (2a) de la reconnaissance d'un appareil visiophonique est généré seulement pendant un moment tellement court, qu'il est déjà terminé au moment ou le combiné (1a) est en position de parler.

4. Procédé selon la revendication 1, caractérisé en ce que la signalisation (D) est remise manuellement à la position initiale par l'abonné appelant (abonné A).

5. Procédé selon la revendication 1, caractérisé en ce que la signalisation (D) est remise automatiquement à la position initiale après un temps (1.4) prédéterminé.

6. Procédé selon la revendication 1, caractérisé en ce que un appareil visiophonique (4) est allumé automatiquement par l'évaluation (3) du signal (2a) de la reconnaissance.

7. Dispositif pour la mise en œuvre du procédé selon la revendication 1, dont chaque poste d'abonné est muni avec
– un appareil visiophonique (1)
– un appareil de branchement visiophonique (5) et
– un écran de visualisation (4)
caractérisé en ce que chaque appareil visiophonique (1) comprend:
– un circuit de reconnaissance (1.1) pour reconnaître un appel sortant de l'appareil visiophonique (1),
– un circuit de reconnaissance (1.2) pour reconnaître un appel arrivant d'un bureau local (OVSt),

– un termineur (GU),

– un circuit porte (1.3) étant commandé par les circuits de reconnaissance (1.1 et 1.2) et le termineur (GU),

– un circuit interrupteur à minuterie,

– un dispositif émetteur (2) commandé par le circuit porte (1.3) pour l'émission d'un signal (2a) de la reconnaissance d'un appareil visiophonique, et

– un circuit de reconnaissance (3) commandé par le circuit porte (1.3) pour la reconnaissance d'un signal de reconnaissance d'un appareil visiophonique arrivant,
en ce que chaque appareil de branchement comprend:

– un branchement (OPT-MUX) à un réseau visiophonique par une ligne d'abonné (Tln.Asl.),

– un convertisseur opto/électronique (o/e) comme récepteur (OE),

– un convertisseur opto/électrique comme émetteur (OS), et

– un multiplexeur (MUX) pour des services à bande large et étroite, respectivement et
en ce que

– un dispositif de visualisation (D) produit après réception d'un signal du circuit (3) de la reconnaissance d'un appareil visiophonique une signalisation.

8. Dispositif selon la revendication 7, caractérisé en ce que le dispositif de visualisation (D) est compris dans l'appareil visiophonique (1).

9. Dispositif selon la revendication 7, caractérisé en ce que le dispositif de visualisation (D) est une part de l'écran de visualisation (4).

10. Dispositif selon une des revendications 7 à 9, caractérisé par un dispositif optique de visualisation (D).

11. Dispositif selon une des revendications 7 à 9, caractérisé par un dispositif acoustique de signalisation (D).

12. Dispositif selon la revendication 7, caractérisé en ce que le dispositif émetteur (2) est actionné par un signal du circuit porte (1.3) et desactivé par le circuit (1.4) interrupteur à minuterie.

13. Dispositif selon la revendication 12, caractérisé en ce que le signal de sortie du circuit interrupteur à minuterie (1.4) est généré environ 1 seconde après l'activation du dispositif émetteur (2).

14. Dispositif selon la revendication 7, caractérisé par des moyens pour l'actionnement automatique de l'écran (4).

A-Tln.                 B-Tln.

Fig.1

0 116 296

Fig.2